# Europäisches Patentamt
# European Patent Office
## Office européen des brevets

(19)

(11) Numéro de publication: **0 014 666**
**B1**

(12) **FASCICULE DE BREVET EUROPEEN**

(45) Date de publication du fascicule du brevet: **17.11.82**

(51) Int. Cl.³: **B 65 G 13/071**

(21) Numéro de dépôt: **80420003.8**

(22) Date de dépôt: **09.01.80**

(54) **Rouleau à friction pour convoyeur à rouleaux entrainés.**

(30) Priorité: **22.01.79 FR 7902148**

(43) Date de publication de la demande:
**20.08.80 Bulletin 80/17**

(45) Mention de la délivrance du brevet:
**17.11.82 Bulletin 82/46**

(84) Etats contractants désignés:
**AT BE CH DE GB IT NL**

(56) Documents cités:
**DE - B - 1 215 583**
**DE - B - 2 550 143**
**FR - A - 1 388 085**
**FR - A - 2 246 471**
**FR - E - 85 422**

(73) Titulaire: **Les Forges Du Lignon Société anonyme dite:**
**F-42130 Boen-Sur-Lignon (Loire) (FR)**

(72) Inventeur: **Margerit, Paul**
**Rue de Lyon "Au Pont"**
**F-42130 Boen Sur Lignon (Loire) (FR)**

(74) Mandataire: **Perrier, Jean-Pierre et al,**
**Cabinet GERMAIN & MAUREAU Le Britannia 20,**
**Boulevard E. Déruelle**
**F-69003 Lyon (FR)**

Rouleau à friction pour convoyeur à rouleaux entrainés-

Les convoyeurs à rouleaux destinés au transport de charges sous forme de paquets, de palettes ou autres, sont composés de plusieurs séries de rouleaux reliés à des moyens d'entrainement et alternant ou non avec des rouleaux fous.

Pour éviter que les rouleaux entrainés puissent patiner sous les charges lorsque celles-ci sont arrêtées et pour empêcher que l'arrêt de la rotation du rouleau par la charge entraine une détérioration des moyens d'entrainement du rouleau ou du moteur les actionnant, il est connu de munir chaque rouleau de moyens à friction interposés entre lui et la partie assurant son entrainement et recevant elle-même son mouvement par tout moyen connu.

Ainsi, le brevet français 1.388.085 du 27.12.1963 décrit un dispositif dans lequel un entraineur, muni d'au moins un pignon à chaîne, est lié, par une garniture de friction annulaire, au rouleau, monté comme lui libre en rotation sur un arbre fixe. Des moyens de tarage, composés de rondelles élastiques et d'un écrou se vissant sur l'arbre, permettent de modifier l'effort de plaquage de l'entraineur sur la garniture et de cette dernière sur la face en bout du rouleau, donc la valeur du couple au-delà duquel il y a glissement et arrêt de l'entrainement du rouleau. En raison de leur structure, ces moyens fournissent un effort qui, pour une position donnée, est constant et indépendant de la charge. De la sorte, le convoyeur ne peut être utilisé que pour transporter des charges de masses voisines, à moins de modifier en permanence le réglage des moyens de tarage. Par ailleurs, si une charge, de masse supérieure à celle des charges pour lesquelles les moyens de tarage ont été réglés, est arrêtée sur le convoyeur par suite du blocage des charges qui la précèdent, l'entraineur et la garniture fonctionnent en limiteur de couple et, lorsqu'ont disparues les causes de blocage, ne sont pas en mesure de faire avancer la charge qu'il faut pousser manuellement au démarrage.

De ce fait, ce type de rouleau ne peut être utilisé que pour des charges constantes ou variant peu, et notamment pour des charges inférieures à 30 Kg.

On connait également par le document DE — B — 1.215.583 un rouleau à friction dans lequel la friction, entre la face interne du rouleau et une douille liée à un entraineur, est proportionnelle à la masse du colis reposant sur le rouleau. Cependant, en raison de la conception et de la disposition des moyens de friction et, notamment, par l'utilisation d'une friction entre des surfaces cylindriques, la valeur de la friction dépend du jeu entre douille et rouleau, donc des tolérances de fabrication et de l'usure de ces pièces. Cette valeur est donc aléatoire d'une part, au montage et, d'autre part, dans le temps puisque le dispositif ne comporte aucun moyen de réglage.

La présente invention a pour but de fournir un rouleau à friction qui, pouvant entrainer ou arrêter des charges variables, légères ou lourdes, est réglable au montage, mais ne nécessite aucun réglage en cours de fonctionnement pour ajuster l'effort de friction à la masse de la charge se déplaçant sur le convoyeur.

A cette fin, l'arbre du rouleau est calé en rotation à chacune de ses extremities dans le châssis par des méplats lui donnant une liberté de translation et présente des caractéristiques mécaniques et dimensionnelles lui permettant de fléchir, pour augmenter localement l'effort de plaquage de sa face en bout contre les moyens de friction en fonction de la masse de la charge le sollicitant.

A l'état non chargé, le rouleau est entrainé en rotation avec un couple très faible grâce à la poussée le plaquant contre les moyens de friction. Par contre, dès qu'une charge passe sur lui, la flexion de son arbre augmente le plaquage de sa face contre les moyens de friction et augmente donc le couple transmis à ce rouleau. Cette augmentation, qui est sensiblement proportionnelle à la masse de la charge, est très intéressante, car elle garantit le démarrage de cette charge lorsque celle-ci n'est plus en butée ou n'est plus arrêtée.

L'invention sera mieux comprise à l'aide de la description qui suit en référence au dessin schématique annexé représentant, à titre d'exemple non limitatif, une forme d'exécution de ce rouleau à friction.

Figures 1 et 2 sont des vues en élévation, respectivement en plan par-dessus et de côté montrant l'extrémité d'un convoyeur à rouleau,

Figure 3 est une vue en coupe longitudinale montrant une forme d'exécution du rouleau selon l'invention.

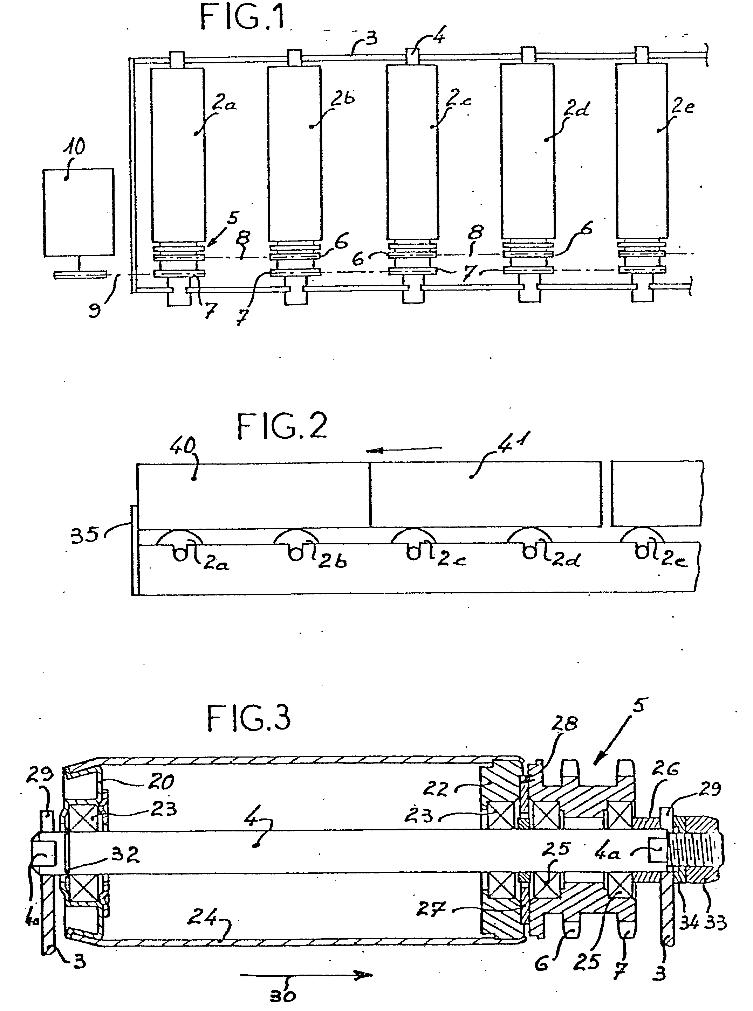

Aux figures 1 et 2, *2a*, *2b*, *2c*, *2d* et *2e* désignent les rouleaux d'une série de cinq rouleaux à entrainer disposés à l'extrémité d'un convoyeur dont le châssis est désigné par *3*. Chacun de ces rouleaux est monté libre en rotation sur un arbre *4* dont les extrémités munies d'un méplat sont engagées dans des découpes ménagées dans les longerons du châssis *3*. Chaque rouleau est lié en rotation à un entraineur désigné de façon générale par *5* et comportant deux pignons juxtaposés *6* et *7*. Ces différents rouleaux sont liés en rotation les uns aux autres par des chaines *8* reliant, alternativement, les pignons *6* et les pignons *7*, tandis que le premier pignon *7* est lié par une chaine *9* à un moto-réducteur *10*.

Chaque rouleau comporte deux boîtiers respectivement, extérieur *20* et intérieur *22*, servant de logement à des roulements à billes 23, comme montré figure 3. Le boîtier 20 est, dans cette forme d'exécution, réalisé en tôle emboutie, tandis que le boîtier 22 est réalisé par usinage. Ces deux boîtiers sont reliés par une jupe extérieure 24 constituant la virole du rouleau. L'entraineur 5 est constitué par une douille métallique montée libre en rotation sur l'arbre 4 par l'intermédiaire de deux roulements 25. Il est calé en translation en direction opposée au rouleau par appui de la bague intérieure de l'un de ses roulements 25 sur une entretoise 26 prenant elle-même appui sur le longeron correspondant du châssis 3.

Les moyens de friction qui sont interposés entre le rouleau et l'entraineur 5 sont constitués, dans cette forme d'exécution, par une garniture de friction annulaire 27 qui est centrée dans un embrèvement 28 ménagé dans l'une des deux faces en bout en vis-à-vis du boîtier 22 et de l'entraineur 5 et, en l'occurence, dans le boîtier 22.

L'arbre 4, qui est calé en rotation par ses méplats 4a engagés dans des fentes 29 des longerons 3, est muni d'un organe de butée apte à communiquer au rouleau 2 une poussée dans le sens de la flèche 30 de figure 3. Dans cette forme d'exécution, cet organe de butée est constitué par un jonc d'arrêt 32 prenant appui sur la cage intérieure du roulement 23 logée dans le boîtier extérieur 20 du rouleau. Les moyens transmettent la poussée dans le sens de la flèche 30 à l'arbre 4 sont disposés à l'autre extrémité de cet arbre et sont constitués, dans cette forme d'exécution, par un écrou 33 vissé sur l'extrémité filetée de l'arbre et prenant appui par l'intermédiaire d'une rondelle 34 sur la face extérieure du longeron 3.

Le réglage de la friction entre le rouleau et l'entraineur 5 est obtenu par vissage de l'écrou 33 sur l'extrémité filetée de l'arbre 4 jusqu'à l'obtention d'un entrainement doux du rouleau. La friction doit être telle qu'une simple pression de la main sur le rouleau doit suffire à l'arrêter, bien que l'entraineur 5 soit entrainé en rotation par le moto-réducteur 10.

Lorsqu'une charge 40 est posée sur plusieurs rouleaux, elle provoque une légère flexion de l'arbre 4 de chacun des rouleaux. Au niveau de la zone de liaison entre le rouleau et son entraineur, cette flexion engendre un effort de pincement de la garniture 27 supérieur à celui initialement réglé au montage. Grâce à cela, le couple transmis au rouleau par l'entraineur est supérieur à celui initial et est proportionnel à la masse de la charge reposant sur le rouleau. La rotation du rouleau est ainsi assurée et la charge avance sur les rouleaux suivants jusqu'à ce qu'elle soit arrêtée, par exemple en venant en contact avec un butoir 35, comme représenté à la figure 2. Dans ces conditions, l'effort de réaction est supérieur à l'effort fourni par la garniture de friction et les rouleaux 2a et 2b, sur lesquels repose la charge 40, s'arrêtent de tourner, bien que leur entraineur 5 soit toujours en rotation. Il en est de même pour les rouleaux 2c et 2d qui portent la charge suivante 41 venant buter contre la charge 40 bloquée par le butoir. Dès que la charge 40 est enlevée, les rouleaux 2a et 2b sont à nouveau entrainés en rotation, de même que les rouleaux 2c et 2d, puisque plus rien ne s'oppose à l'avancement de la charge 41.

Ce dispositif de liaison entre l'entraineur et les rouleaux, bien que particulièrement simple, permet de donner entière satisfaction pour des charges allant de quelques kilogrammes à des charges de l'ordre de 200 kilogrammes, sans qu'il soit nécessaire de procéder à un réglage pour ajuster le couple transmis, et cela, grâce à la proportionnalité directe entre l'effort de pincement de la garniture avec la masse de la charge transportée. Par ailleurs, ce dispositif présente l'avantage d'absorber une faible puissance lors du patinage de la garniture et d'être réversible, c'est-à-dire de fonctionner, quel que soit le sens d'actionnement, ce qui permet d'envisager des applications nouvelles dans le domaine des convoyeurs.

Dans la forme d'exécution décrite ci-dessus, l'entraineur est disposé, comme le rouleau, entre les deux longerons 3 du châssis, afin d'augmenter les effets de la flexion de l'arbre, mais il est évident que, dans une autre forme d'exécution, il peut être disposé différemment. De même, les moyens de friction qui, dans cette forme d'exécution, sont constitués par une garniture 27, peuvent être constitués directement par le boîtier 22 ou l'entraineur 5 qui, dans ce cas, est réalisé, au moins localement, dans un matériau présentant un coefficient de frottement adapté. Enfin, grâce à la faible puissance absorbée par le limiteur de couple, le moto-réducteur 10 peut entrainer un plus grand nombre de rouleaux.

**Revendications**

1. Rouleau à friction pour convoyeur à rouleaux entrainés, du type composé d'un arbre (4) calé en rotation dans un châssis (3), d'un rouleau (2a) et d'un entraineur (5), muni d'au moins un pignon à chaîne (6), montés libres en rotation sur l'arbre (4), d'une garniture de friction (27) interposée entre l'une des faces en bout du rouleau et la face en vis-à-vis de l'entraineur (5), et des moyens de réglage de l'effort de plaquage de la garniture comportant un organe de butée (32) solidaire de cet arbre et transmettant au rouleau (2) une poussée longitudinale réglable, caractérisé en ce que l'arbre (4) est calé en rotation à chacune de ses extrémités dans le châssis par des méplats (4a) lui donnant une liberté de translation et présente des caractéristiques mécaniques et dimensionnelles lui permettant de fléchir pour augmenter localement l'effort de plaquage de sa face en bout contre la garniture de friction (27).

2. Rouleau selon la revendication 1, caractérisé en ce que l'organe de butée (32), disposé à proximité de l'une des extrémités de l'arbre (4), est appliqué contre le rouleau (2a) par des moyens de réglage (33) disposés à l'autre extrémité de l'arbre, prenant appui sur le châssis (3) et communiquant à cet arbre (4) une traction longitudinale de valeur réglable.

3. Rouleau selon l'ensemble des revendications 1 et 2, caractérisé en ce que l'organe de butée (32) est constitué par un jonc d'arrêt, disposé dans une gorge de l'arbre et prenant appui sur la cage intérieure de l'un des deux roulements à billes (23) interposés entre l'arbre (4) et deux boîtiers (20—22) solidaires de la jupe (24) du rouleau.

4. Rouleau selon l'une quelconque des revendications 1 à 3, caractérisé en ce que les moyens de réglage sont constitués par un écrou (33) vissé à l'extrémité de l'arbre (4) et prenant appui sur la face extérieure du châssis (3).

## Claims

1. Friction roller for a conveyor comprising driven rollers, of the type composed of a shaft (4) keyed to rotate in a frame (3), of a roller (2a) and a driving device (5), provided with at least one sprocket wheel (6), mounted to rotate freely on the shaft (4), of a friction lining (27) interposed between one of the end faces of the roller and the opposing face of the driving device (5) and means for regulating the pressing force of the lining comprising a stop member (32) integral with this shaft and transmitting to the roller (2) an adjustable longitudinal thrust, characterised in that the shaft (4) is keyed to rotate at each of its ends in the frame by flat portions (4a) giving it a freedom of translation and has mechanical and dimensional characteristics enabling it to bend in order to increase locally the pressing force of its end face against the friction lining (27).

2. Roller according to claim 1, characterised in that the stop member (32), located in the vicinity of one of the ends of the shaft (4), is pressed against the roller (2a) by regulating means (33) located at the other end of the shaft, bearing on the frame (3) and imparting longitudinal traction of adjustable value to this shaft (4).

3. Roller according to claims 1 and 2, characterised in that the stop member (32) is constituted by a stop ring, located in a groove in the shaft and bearing on the inner cage of one of the two ball bearings (23) interposed between the shaft (4) and two casings (20—22) integral with the skirt (24) of the roller.

4. Roller according to one of claims 1 to 3, characterised in that the regulating means are constituted by a nut (33) screwed to the end of the shaft (4) and bearing on the outer face of the frame (3).

## Patentansprüche

1. Tragrolle mit Reibkupplung für angetriebene Rollenbahn, des Typs, welcher zusammengesetzt ist aus einer an einem Rahmen (3) rotationsverkeilten Welle (4), aus einer Rolle (2a) und einem mit mindestens einem Kettenritzel (6) versehenen Mitnehmer (5), welche auf der Welle (4) frei drehbar angeordnet sind, aus einem Reibungsbelag (27), der zwischen einer der Stirnseiten der Rolle und der gegenüberliegenden Stirnseite des Mitnehmers (5) angeordnet ist, und aus Mitteln zur Regelung der Flächendruckbeanspruchung des Belages, welche Mittel ein mit dieser Welle fest verbundenes Axiallagerorgan (32) umfassen und auf die Rolle (2) einen regelbaren Axialdruck übertragen, dadurch gekennzeichnet, daß die Welle (4) an jedem ihrer Enden in dem Rahmen mittels Abflachungen (4a) verkeilt ist, die ihr eine freie Verschiebbarkeit geben, wobei die Welle mechanische und dimensionsmäßige Eigenschaften aufweist, die ihr ein Durchbiegen erlauben zwecks örtlicher Erhöhung der Flächendruckbeanspruchung ihrer Endfläche gegen den Reibungsbelag (27).

2. Tragrolle nach Anspruch 1, dadurch gekennzeichnet, daß das Axiallagerorgan (32), das in der Nähe eines der Enden der Welle (4) angeordnet ist, an der Rolle (2a) durch am andern Ende der Welle angeordnete Regelmittel (33) in Anlage gehalten ist, die sich an dem Rahmen (3) abstützen und auf die Welle (4) einen längsrichteten Zug einstellbarer Größe ausüben.

3. Tragrolle gemäß der Gesamtheit der Ansprüche 1 und 2, dadurch gekennzeichnet, daß das Axiallagerorgan (32) durch einen Arretiersprengring gebildet ist, der in einer Rille der Welle angeordnet ist und sich am inneren Käfig eines der beiden Kugellager (23) abstützt, welche zwischen der Welle (4) und zwei Gehäusen (20—22) eingesetzt sind, die mit dem Mantel (24) der Rolle fest verbunden sind.

4. Tragrolle nach irgendeinem der Ansprüche 1 bis 3, dadurch gekennzeichnet, daß die Regelmittel durch eine mutter (33) gebildet sind, die auf das Ende der Welle (4) aufgeschraubt ist und sich an der Aussenseite des Rahmens (3) abstützt.

# FIG.1

# FIG.2

# FIG.3